# FASCICULE DE BREVET EUROPEEN

(11) **EP 4 014 443 B1**
(45) Date de publication et mention de la délivrance du brevet: **12.06.2024**
(21) Numéro de dépôt: 20753308.4
(22) Date de dépôt: 31.07.2020
(51) Int. Cl.: H04L 51/18

(54) **PROCÉDÉ DE CRÉATION D'UN MESSAGE ÉLECTRONIQUE À INTÉGRITÉ GARANTIE ET VÉRIFIABLE SELON LE STANDARD MIME**
VERFAHREN ZUR SCHAFFUNG EINER ELEKTRONISCHEN NACHRICHT, DEREN INTEGRITÄT GEWÄHRLEISTET UND NACH DEM MIME-STANDARD ÜBERPRÜFBAR IST
METHOD FOR CREATING AN ELECTRONIC MESSAGE THE INTEGRITY OF WHICH IS GUARANTEED AND VERIFIABLE ACCORDING TO THE MIME STANDARD

(30) Priorité: 12.08.2019 FR 1909145
(43) Date de publication de la demande: 22.06.2022
(73) Titulaire: Mailstone, 13100 Aix en Provence (FR)
(72) Inventeur: DAMMANN, Franck, 13100 Aix en Provence (FR)
(74) Mandataire: Sayettat, Julien Christian
(86) Numéro de dépôt international: PCT/EP2020/071670
(87) Numéro de publication internationale: WO 2021/028241

(56) Documents cités:
- US-A1- 2003 009 694
- HARDING R SCOTT AXWAY T: "FTP Transport for Secure Peer-to-Peer Business Data Interchange over the Internet; rfc4823.txt", FTP TRANSPORT FOR SECURE PEER-TO-PEER BUSINESS DATA INTERCHANGE OVER THE INTERNET; RFC4823.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 avril 2007 (2007-04-01), XP015050671,

## Description

### Arrière plan de l'invention :

La présente invention concerne un procédé de création, au sein d'un serveur offrant un service internet de garantie d'intégrité des messages électroniques, d'un message électronique à intégrité garantie et vérifiable selon le standard MIME à partir d'un message électronique selon le standard MIME comprenant, selon ce standard, un en-tête comprenant au moins des données de routage et de type de contenu, une adresse de l'expéditeur et au moins une adresse de destinataire, et un corps comprenant un contenu de message, le standard MIME permettant l'introduction, dans l'en-tête, d'un ou plusieurs champs d'extension (extension-field en anglais dans le standard) ou d'un ou plusieurs champs définis par l'utilisateur (user-defined field), ces champs comprenant un couple formé d'au moins un tag permettant d'identifier le champ et d'une valeur.

Actuellement, les messages électroniques connus sous la dénomination anglaise « email » utilisent un format standardisé appelé MIME pour Multipurpose Internet Mail Extension. Ce standard est défini notamment dans les documents suivants de l'organisme de standardisation Internet Engineering Task Force : RFC 1521 https://tools.ietf.org/html/rfc1521 rfc4823 et RFC 1590 https://tools.ietf.org/html/rfc1590.

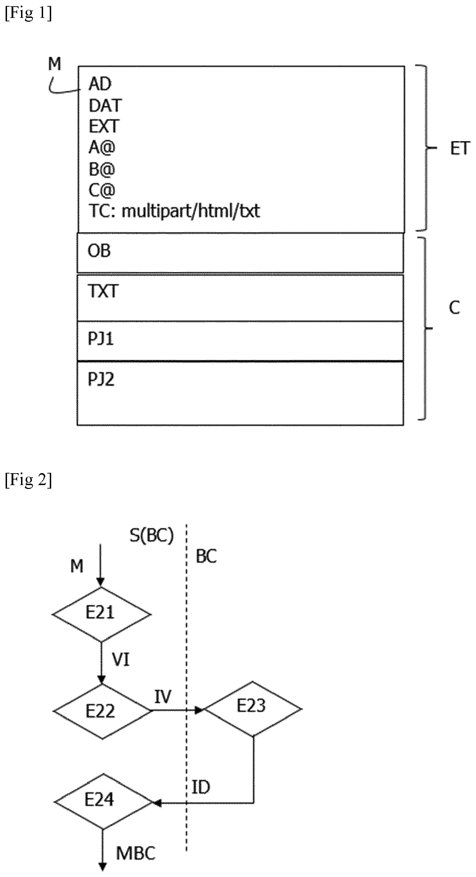

La figure 1 décrit ainsi schématiquement la structure d'un message électronique selon le standard MIME. Le message M comprend un en-tête ET et un corps C. L'en-tête ET inclut des au moins une adresse d'expéditeur A@, au moins une adresse de destinataire B @, éventuellement une adresse de copie ou d'un autre destinataire C@, un type de contenu TC et, le cas échéant un ou des champs d'extension EXT tel que défini dans le standard ou défini par l'utilisateur. L'en-tête reçoit également les données d'acheminement ou routage AD qui se remplissent en fonction du cheminement du message lors de son envoi vers un destinataire. La date d'envoi DAT est aussi partie de cet en-tête ET. Le corps C comprend un contenu de message qui inclut généralement au moins un des éléments suivants : objet du message OB, texte enrichi ou non TXT, pièces jointes PJ1, PJ2.

Il est bien connu que ces emails peuvent être facilement modifiés lors de l'envoi, voire lors même de la réception en modifiant certains paramètres de l'objet MIME. Cela est possible dans la partie en-tête du message, incluant la date, l'émetteur et le destinataire notamment mais aussi dans la partie corps du message qui inclut notamment l'objet du message, le texte enrichi ou non et les pièces jointes.

Cela nuit à la fiabilité des messages électroniques et rend difficile leur utilisation en tant que preuve lors de différends entre expéditeur et destinataire. Comme les messages électroniques restent à ce jour le moyen le plus utilisé entre particuliers mais aussi entre professionnels, il manque un outil de fiabilisation facile de tels messages électroniques

### Objet et résumé de l'invention

La présente invention a donc pour but principal de proposer un outil pour fiabiliser les messages électroniques en garantissant l'intégrité des messages électroniques par l'intermédiaire d'un service proposé en ligne.

L'invention consiste ainsi en un procédé selon l'arrière-plan de l'invention comprenant les étapes de :
a. réception du message électronique dont l'intégrité est à garantir,
b. calcul d'une valeur d'intégrité du message électronique,
c. enregistrement de la valeur d'intégrité dans une transaction d'une chaine de blocs,
d. réception d'un identifiant de transaction,
e. insertion de l'identifiant de transaction en tant que valeur associée à un tag spécifique dans un champ d'extension défini dans le standard ou défini par l'utilisateur dans l'en-tête du message électronique dont l'intégrité est à garantir, le message électronique ainsi obtenu constituant le message dont l'intégrité est garantie et vérifiable.

L'invention permet ainsi de garantir que l'objet MIME a été envoyé au serveur du service selon l'invention en même temps qu'à un autre destinataire tel que spécifié dans l'en-tête ET, à un horodatage défini dans le message M et qu'il est intègre en s'appuyant sur les propriétés de la technologie Blockchain.

Selon une mise en oeuvre, le tag spécifique est un tag existant préalablement pour un champ d'extension prévu dans le standard MIME et approprié par le procédé.

Cette mise en oeuvre utilise un champ d'extension tel que défini dans le standard MIME. Il peut éventuellement s'agir du tag x-mailer ID du standard MIME. Cependant cette mise en oeuvre peut être affaiblie dans le cas où ce champ d'extension peut être utilisé pour une autre raison. Dans ce cas, il existe donc un risque que la valeur associée au tag soit effacée par une utilisation ultérieure du tag.

Aussi, selon une mise en oeuvre de l'invention, le tag spécifique est un tag créé spécifiquement pour le procédé pour définir un champ d'extension défini par l'utilisateur selon le standard MIME.

Cette mise en oeuvre exploite la possibilité offerte par le standard MIME, pour un utilisateur créateur d'un message électronique, de définir et de remplir un champ d'extension.

L'invention concerne également un procédé de vérification de l'intégrité d'un message électronique à intégrité garantie et vérifiable obtenu selon le procédé de l'invention.

Ainsi, l'invention propose également un procédé de vérification de l'intégrité d'un message électronique à intégrité garantie et vérifiable obtenu selon le procédé de l'une des revendications précédentes, au sein d'un serveur d'une entité ayant besoin de cette vérification, ce procédé comprenant les étapes de :
a. récupération du message électronique à intégrité garantie et vérifiable,
b. récupération de l'identifiant de transaction comme étant la valeur associée au tag spécifique dans le champ d'extension ou le champ défini par l'utilisateur utilisé par le procédé de création d'un message à intégrité garantie et vérifiable de l'invention,
c. récupération de la valeur d'intégrité telle qu'enregistrée dans la chaine de blocs,
d. effacement du champ d'extension ou du champ défini par l'utilisateur dans le message électronique récupéré,
e. calcul d'une valeur d'intégrité sur le message électronique ainsi obtenu,
f. comparaison de la valeur d'intégrité calculée avec la valeur d'intégrité récupérée,
g. valider l'intégrité du message lorsque les deux valeurs d'intégrité sont identiques.

Ce procédé de vérification permet, dès lors que le message à intégrité garantie et vérifiable correspondant à un message d'origine est disponible au sein d'une entité qui souhaite vérifier l'intégrité de ce message à intégrité garantie et vérifiable, de recalculer à partir de ce message la valeur d'intégrité et de la comparer avec celle stockée sur la chaine de blocs.

Ce procédé est très simple à mettre en oeuvre, que le message à intégrité garantie et vérifiable est mis à disposition.

L'invention concerne aussi plusieurs utilisations du procédé de création d'un message à intégrité garantie et vérifiable selon l'invention pour la production d'un rapport d'intégrité pour un message électronique dont l'intégrité doit être garantie et pour l'obtention d'un tel rapport par l'expéditeur.

Ainsi l'invention concerne aussi, dans un mode de réalisation, un procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'invention, ce procédé d'obtention d'un rapport d'intégrité comprenant les étapes préliminaires suivantes :
a. création d'un compte utilisateur par un utilisateur auprès du service réseau de garantie d'intégrité,
b. réception d'une adresse de messagerie électronique dédiée au service réseau de garantie d'intégrité et à l'utilisateur,
c. puis, lorsque l'utilisateur veut faire garantir l'intégrité d'un message électronique, les étapes suivantes :
d. rédaction par un expéditeur du message électronique dont l'intégrité doit être garantie,
e. envoi du message dont l'intégrité doit être garantie à au moins une adresse de messagerie électronique de destination et à l'adresse de messagerie électronique dédiée au service réseau de garantie d'intégrité et à l'utilisateur, ce dernier envoi permettant la mise en oeuvre du procédé de création d'un message électronique à intégrité garantie et vérifiable selon l'invention au sein d'un serveur offrant un service réseau de garantie d'intégrité à réception du message à l'adresse de messagerie électronique dédiée au service réseau de garantie d'intégrité et à l'utilisateur,
f. réception d'un rapport d'intégrité comprenant au moins un élément permettant d'accéder au message électronique à intégrité garantie et vérifiable selon le standard MIME créé par le service réseau de garantie d'intégrité.

Avantageusement, ce mode de réalisation d'un procédé d'obtention d'un rapport d'intégrité selon l'invention est tel que la création du compte utilisateur comprend les sous-étapes suivantes :
a. envoi d'un message électronique à une adresse de messagerie électronique du service réseau de garantie d'intégrité,
b. réception d'un message électronique comprenant un lien de finalisation de l'inscription sur une page web du service réseau de garantie d'intégrité,
c. finalisation de l'inscription par l'intermédiaire de la page web du service réseau de garantie d'intégrité déclenchant l'envoi de l'adresse de messagerie électronique dédiée au service réseau de garantie d'intégrité à utiliser en destinataire pour les envois ultérieurs de message électronique dont l'intégrité doit être garantie.

Selon un autre mode de réalisation, l'invention concerne un procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'invention, ce procédé d'obtention d'un rapport d'intégrité étant mis en oeuvre à partir d'un dispositif d'un utilisateur utilisant un client de messagerie, le procédé comprenant les étapes préliminaires suivantes :
a. création d'un compte utilisateur par un utilisateur auprès du service réseau de garantie d'intégrité,
b. installation d'un module additionnel dédié au service réseau de garantie d'intégrité sur un client de messagerie générant l'insertion d'une commande dédiée à la garantie d'intégrité sur le client de messagerie, le module additionnel étant configuré avec une adresse de messagerie électronique dédiée au service réseau de garantie d'intégrité à l'utilisateur,
c. puis, lorsque l'utilisateur veut faire garantir l'intégrité d'un message électronique, les étapes suivantes :
d. rédaction du message électronique dont l'intégrité doit être garantie,
e. actionnement de la commande dédiée à la garantie d'intégrité lors de la rédaction du message déclenchant, lorsqu'elle est activée, lors de l'envoi du message dont l'intégrité doit être garantie à au moins une adresse de messagerie électronique de destination, l'envoi automatique en parallèle à l'adresse de messagerie électronique dédiée au service réseau de garantie d'intégrité et à l'utilisateur pour mise en oeuvre du procédé de création d'un message électronique à intégrité garantie et vérifiable selon l'invention,
f. réception d'un rapport d'intégrité comprenant au moins un élément permettant d'accéder au message électronique à intégrité garantie et vérifiable selon le standard MIME créé par le service réseau de garantie d'intégrité.

Selon un autre mode de réalisation, l'invention concerne un procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'invention, ce procédé d'obtention d'un rapport d'intégrité étant mis en oeuvre à partir d'un dispositif d'un utilisateur utilisant un client de messagerie,

le procédé comprenant une étape préliminaire de configuration du client de messagerie avec un serveur de messagerie offrant lui-même le service internet de garantie d'intégrité des messages électroniques,

puis les étapes suivantes :
a. - rédaction du message électronique dont l'intégrité doit être garantie à l'attention d'un destinataire,
b. - envoi du message électronique par l'intermédiaire du serveur de messagerie défini dans la configuration du client de messagerie, ce dernier envoyant directement le message au destinataire et effectuant lui-même le procédé de création d'un message électronique à intégrité garantie et vérifiable selon l'invention et la construction d'un rapport d'intégrité, pour envoi au client de messagerie, comprenant au moins un élément permettant d'accéder au message électronique à intégrité garantie et vérifiable selon le standard MIME créé par le service réseau de garantie d'intégrité,
c. - réception du rapport d'intégrité par le client de messagerie.

Selon un autre mode de réalisation, l'invention concerne un procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'invention, ce procédé d'obtention d'un rapport d'intégrité étant mis en oeuvre à partir d'un dispositif d'un utilisateur utilisant un compte d'un service internet de messagerie dont les serveurs de messagerie offrent eux-mêmes le service internet de garantie d'intégrité des messages électroniques, le procédé comprenant, lorsque l'utilisateur veut faire garantir l'intégrité d'un message électronique, les étapes suivantes :
a. - rédaction du message électronique dont l'intégrité doit être garantie à l'attention d'un destinataire en signalant le besoin de garantie d'intégrité dans le service internet de messagerie,
b. - envoi du message électronique par l'intermédiaire du serveur de messagerie, ce dernier envoyant directement le message au destinataire et effectuant lui-même le procédé de création d'un message électronique à intégrité garantie et vérifiable selon l'invention et la construction d'un rapport d'intégrité, pour envoi au compte de l'utilisateur, comprenant au moins un élément permettant d'accéder au message électronique à intégrité garantie et vérifiable selon le standard MIME créé par le service réseau de garantie d'intégrité,
c. - réception du rapport d'intégrité dans le compte de l'utilisateur.

Selon une caractéristique avantageuse, l'invention concerne un procédé d'obtention d'un rapport d'intégrité tel que décrit dans les modes de réalisation précédents, dans lequel, une demande d'accusé de réception étant ajoutée dans le message dont l'intégrité doit être garantie, l'accusé de réception obtenu est inclus dans le rapport d'intégrité.

Dans un autre type de réalisation, l'invention concerne un procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'invention, ce procédé d'obtention d'un rapport d'intégrité étant mis en oeuvre à partir d'un dispositif d'un utilisateur utilisant un client de messagerie, le procédé comprenant les étapes préliminaires suivantes :
a. création d'un compte utilisateur par un utilisateur auprès du service réseau de garantie d'intégrité,
b. installation d'un module additionnel dédié au service réseau de garantie d'intégrité sur le client de messagerie générant l'insertion d'une commande dédiée à la garantie d'intégrité sur le client de messagerie, le module additionnel étant configuré avec une adresse de messagerie électronique dédiée au service réseau de garantie d'intégrité à l'utilisateur,
c. puis, lorsque l'utilisateur veut faire garantir l'intégrité d'un message électronique, les étapes suivantes :
d. rédaction du message électronique dont l'intégrité doit être garantie,
e. à l'activation de la commande d'envoi du message électronique, avant l'envoi du message au destinataire, envoi du message électronique à l'adresse de messagerie électronique dédiée au service réseau de garantie d'intégrité pour mise en oeuvre du procédé de création d'un message électronique à intégrité garantie et vérifiable selon l'invention,
f. réception, par le module additionnel, du message électronique à intégrité garantie et vérifiable,
g. envoi, par le module additionnel, du message électronique à intégrité garantie et vérifiable au destinataire avec une demande d'accusé de réception,
h. réception de l'accusé de réception,
i. le rapport d'intégrité étant constitué a minima de l'accusé de réception et du message électronique à intégrité garantie et vérifiable ou de l'accusé de réception et d'un élément permettant d'accéder au message électronique à intégrité garantie et vérifiable selon le standard MIME créé par le service réseau de garantie d'intégrité.

Dans un mode de réalisation particulier, le module additionnel demande au serveur offrant le service de garantie d'intégrité un rapport d'intégrité comprenant un élément permettant d'accéder au message électronique à intégrité garantie et vérifiable selon le standard MIME créé par le service réseau de garantie d'intégrité. Dans ce cas, le message à intégrité garantie peut être récupéré avec cet élément auprès du service de l'invention. On remarque ici que le message à intégrité garantie reçu peut être effacé dans le dispositif de l'utilisateur ou son compte.

Dans un autre mode de réalisation du même type que le précédent, l'invention concerne un procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'invention, ce procédé d'obtention d'un rapport d'intégrité étant mis en oeuvre à partir d'un dispositif d'un utilisateur utilisant un client de messagerie,

le procédé comprenant une étape préliminaire de configuration du client de messagerie avec un serveur de messagerie offrant lui-même le service internet de garantie d'intégrité des messages électroniques, puis, lorsque l'utilisateur veut faire garantir l'intégrité d'un message électronique, les étapes suivantes :
a. - rédaction du message électronique dont l'intégrité doit être garantie à l'attention d'un destinataire,
b. - envoi du message électronique par l'intermédiaire du serveur de messagerie défini dans la configuration du client de messagerie, ce dernier effectuant lui-même le procédé de création d'un message électronique à intégrité garantie et vérifiable selon l'invention, puis envoyant, avec demande d'accusé de réception, le message électronique à intégrité garantie et vérifiable au destinataire, réceptionnant l'accusé de réception, et enfin, construisant, pour envoi au client de messagerie, un rapport d'intégrité avec au moins l'accusé de réception et un élément permettant d'accéder au message électronique à intégrité garantie et vérifiable selon le standard MIME créé par le service réseau de garantie d'intégrité,
c. - réception du rapport d'intégrité par le client de messagerie.

Dans un autre mode de réalisation du même type, l'invention concerne un procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'invention, ce procédé d'obtention d'un rapport d'intégrité étant mis en oeuvre à partir d'un dispositif d'un utilisateur utilisant un compte d'un service internet de messagerie dont les serveurs de messagerie offrent eux-mêmes le service internet de garantie d'intégrité des messages électroniques, le procédé comprenant, lorsque l'utilisateur veut faire garantir l'intégrité d'un message électronique, les étapes suivantes :
a. - rédaction du message électronique dont l'intégrité doit être garantie à l'attention d'un destinataire en signalant le besoin de garantie d'intégrité dans le service internet de messagerie,
b. - envoi du message électronique par l'intermédiaire du serveur de messagerie effectuant lui-même le procédé de création d'un message électronique à intégrité garantie et vérifiable selon l'invention, ce serveur de messagerie envoyant, avec demande d'accusé de réception, le message électronique à intégrité garantie et vérifiable au destinataire, réceptionnant l'accusé de réception, et enfin, construisant, pour envoi au compte de l'utilisateur, un rapport d'intégrité avec au moins l'accusé de réception et un élément permettant d'accéder au message électronique à intégrité garantie et vérifiable selon le standard MIME créé par le service réseau de garantie d'intégrité,
c. - réception du rapport d'intégrité dans le compte de l'utilisateur.

Avantageusement, l'élément permettant d'accéder au message électronique à intégrité garantie et vérifiable selon le standard MIME créé par le service réseau de garantie d'intégrité est le message électronique à intégrité garantie et vérifiable lui-même.

Aussi, l'élément permettant d'accéder au message électronique à intégrité garantie et vérifiable selon le standard MIME créé par le service réseau de garantie d'intégrité peut être l'identifiant de transaction dans la chaine de blocs, cet identifiant étant stocké associé au message à intégrité garantie au sein d'un serveur permettant la vérification de l'intégrité du message.

L'invention concerne aussi un serveur mettant en oeuvre le procédé de création d'un message électronique à intégrité garantie et vérifiable selon l'invention. Elle concerne ainsi un serveur offrant un service internet de garantie d'intégrité des messages électroniques par création d'un message électronique à intégrité garantie et vérifiable selon le standard MIME à partir d'un message électronique selon le standard MIME comprenant, selon ce standard, un en-tête comprenant au moins des données de routage et de type de contenu, une adresse de l'expéditeur et au moins une adresse de destinataire, et un corps comprenant un contenu de message, le standard MIME permettant l'introduction, dans l'en-tête, d'un ou plusieurs champs d'extension (extension-field en anglais dans le standard) ou d'un ou plusieurs champs définis par l'utilisateur (user-defined field), ces champs comprenant un couple formé d'au moins un tag permettant d'identifier le champ et d'une valeur, ledit serveur étant adapté pour la réception de message électroniques dont l'intégrité est à garantir, ledit serveur comprenant un module de calcul d'une valeur d'intégrité à partir du message électronique reçu, ledit serveur ayant accès à une chaine de blocs pour enregistrer la valeur d'intégrité dans une transaction de cette chaine de blocs et en recevoir un identifiant de transaction, ledit serveur étant adapté pour insérer l'identifiant de transaction en tant que valeur associée à un tag spécifique dans un champ d'extension ou dans un champ défini par l'utilisateur dans l'en-tête du message électronique dont l'intégrité est à garantir, le message électronique ainsi obtenu constituant le message dont l'intégrité est garantie et vérifiable.

Ce serveur est le coeur de l'invention, il pourra être inséré dans l'un ou l'autre des modes de réalisation des procédés d'obtention d'un rapport d'intégrité.

Avantageusement ce serveur est lui-même le serveur de messagerie de l'expéditeur ou du destinataire.

On note ici que seule la réalisation dans laquelle le serveur de messagerie de l'expéditeur est le serveur offrant le service selon l'invention est décrite en détail dans la suite mais que la réalisation où le serveur de messagerie du destinataire prend en charge le service de l'invention est semblable. On note que le cas où le serveur du destinataire prend en charge le procédé de création du message à intégrité garantie et vérifiable est avantageux dans la mesure où les données d'acheminement sont alors celles de l'acheminement jusqu'au serveur de messagerie du destinataire. Cela requiert seulement que la demande de garantie d'intégrité de l'expéditeur soit prise en charge par le serveur du destinataire.

La réalisation avec un serveur du destinataire offrant le service selon l'invention requiert que ce serveur soit apte à réaliser l'invention. Dans le cas contraire, il sera toujours possible d'aiguiller la demande sur serveur offrant le service de garantie d'intégrité selon l'invention indépendamment de l'acheminement des messages.

L'invention concerne aussi un client de messagerie comprenant un module additionnel dédié au service réseau de garantie d'intégrité sur un client de messagerie générant l'insertion d'une commande dédiée à la garantie d'intégrité sur le client de messagerie, le module additionnel étant configuré avec une adresse de messagerie électronique dédiée au service réseau de garantie d'intégrité à l'utilisateur, et adapté pour mettre en oeuvre le procédé d'obtention d'un rapport d'intégrité de l'invention correspondant.

Enfin l'invention concerne un dispositif d'un utilisateur utilisant un client de messagerie selon l'invention.

Il convient de préciser les termes utilisés dans ce document :
a. serveur : par serveur, nous entendons que cela puisse être un :
   i. Serveur de messagerie (SMTP/POP/IMAP)
   ii. Serveur Voice Over IP
   iii. Tout autre serveur utilisant le protocole MIME
b. message électronique : nous entendons tout messages textuels utilisant des jeux de caractères autres que ASCII.
c. module additionnel : les modules additionnels présentés dans ce document sont des extensions de logiciels de messagerie (mail ou messagerie instantanée) existants comme :
   i. Plugin Microsoft Outlook
   ii. Plugin Gmail
   iii. Plugin Yahoo
   iv. Plugin Hotmail
   v. Ou tout autre client de messagerie utilisant le protocole MIME

### Brève description des dessins

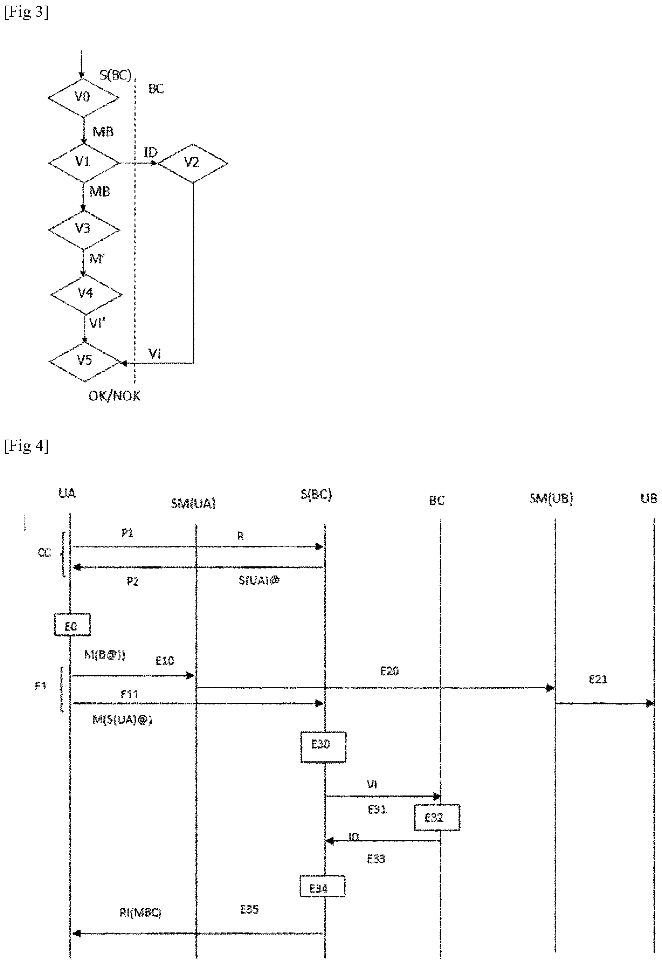

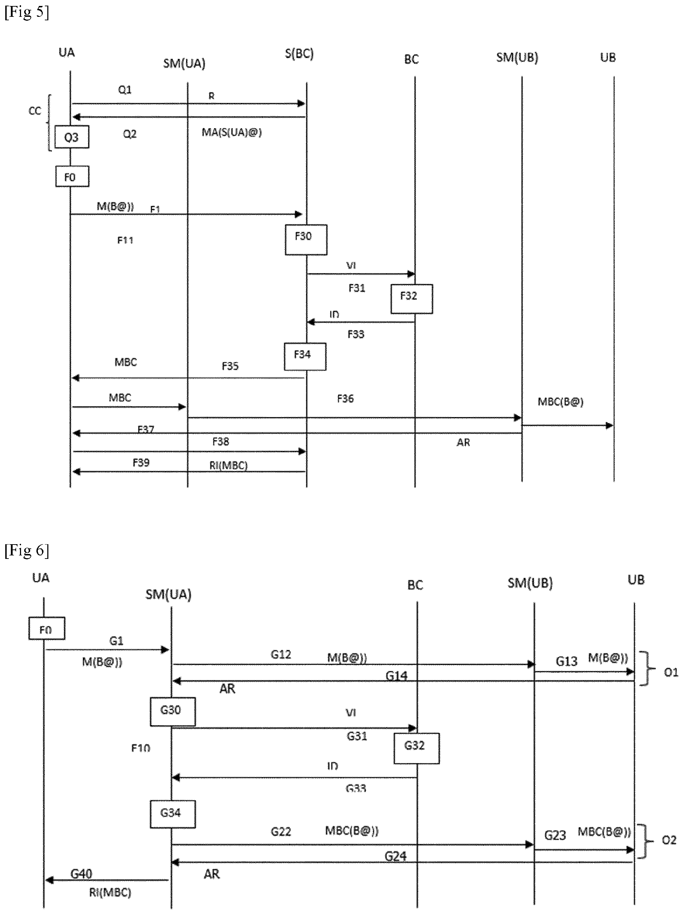

D'autres caractéristiques et avantages de la présente invention ressortiront de la description faite ci-dessous, en référence aux dessins annexés qui en illustrent un exemple de réalisation dépourvu de tout caractère limitatif. Sur les figures :
a. - la figure 1 illustre schématiquement la structure d'un message électronique, objet selon le standard MIME,
b. - la figure 2 montre schématiquement un procédé de création d'un message électronique à intégrité garantie et vérifiable selon l'invention ;
c. - la figure 3 illustre schématiquement le procédé de vérification de l'intégrité d'un message à intégrité garantie et vérifiable selon l'invention ;
d. - la figure 4 illustre schématiquement un procédé d'obtention d'un rapport d'intégrité par l'expéditeur selon un mode de réalisation préférentiel;
e. - la figure 5 illustre schématiquement un procédé d'obtention d'un rapport d'intégrité par un serveur implémentant le procédé de création de message électronique à intégrité garantie et vérifiable selon un autre mode de réalisation;
f. - la figure 6 illustre schématiquement un procédé d'obtention d'un rapport d'intégrité par un serveur de messagerie selon deux autres modes de réalisation;

### Description détaillée d'un mode de réalisation

La figure 2 montre schématiquement la création d'un message électronique à intégrité garantie et vérifiable MB selon l'invention à partir d'un message M.

Ainsi selon ce procédé, le message M est reçu, typiquement par un serveur S(BC) implémentant le service internet de garantie d'intégrité des messages électroniques selon l'invention.

Dans une première étape E21, une valeur d'intégrité VI du message M est calculée. Il s'agit typiquement d'un HASH ainsi que détaillé dans la suite de la description. L'enregistrement de cette valeur d'intégrité VI dans une chaine de blocs BC est ensuite demandée, typiquement par le serveur S(BC) dans une étape E22. L'enregistrement dans la chaine de blocs BC est effectuée dans une étape E23. Un identifiant de transaction ID est alors produit et envoyé au serveur S(BC) où il est inséré en tant que valeur associée à un tag spécifique dans un champ d'extension dans une étape E24. Le message résultant est le message à intégrité garantie et vérifiable MB.

La figure 3 représente schématiquement le procédé de vérification d'un message à intégrité garantie et vérifiable MB selon l'invention.

L'entité vérificatrice au sein de laquelle est mis en oeuvre un tel procédé de vérification est le serveur offrant le service internet de garantie d'intégrité des messages électroniques lui-même ou un serveur d'une tierce partie, par exemple un serveur gouvernemental, ou un serveur ou un ordinateur d'une personne assermentée type huissier de justice etc.

Il est nécessaire que cette entité puisse avoir accès à la chaine de blocs BC où sont enregistrées les transactions du procédé selon l'invention et qu'il puisse récupérer le message à intégrité garantie et vérifiable. Cette récupération peut être faite par réception du message directement en provenance de l'expéditeur qui aurait stocké le message à intégrité garantie dans le cas où il l'aurait réceptionné dans le rapport d'intégrité. Le message à intégrité garantie peut aussi être récupéré auprès d'un serveur offrant le service de garantie d'intégrité selon l'invention qui l'aurait stocké. Dans le cas où le message n'est pas directement accessible, le vérificateur recevra un élément permettant de récupérer le message, de la part de l'expéditeur afin de pouvoir récupérer le message à intégrité garantie et vérifiable typiquement auprès du service de garantie d'intégrité. Cet élément peut être l'identifiant de transaction lui-même ou un autre identifiant associé au message à intégrité garantie ou à l'identifiant de transaction.

Dans la réalisation décrite sur la figure, dans une première étape V0, l'entité vérificatrice récupère le message à intégrité garantie et vérifiable MB. Puis, dans une étape V1, un identifiant de transaction ID est récupéré en utilisant le tag spécifique pour retrouver la valeur au sein du message à intégrité garantie et vérifiable.

Dans une étape V2, cet identifiant ID est envoyé vers un serveur hébergeant la chaine de blocs BC pour récupération de la valeur d'intégrité VI stockée dans la chaine de blocs BC.

En parallèle, dans une étape V3, le champ d'extension constitué par le tag spécifique et la valeur associée est effacé du message à intégrité garantie et vérifiable. Cela conduit à l'obtention d'un message M' normalement identique au message M tel que reçu par le serveur S(BC) offrant le service selon l'invention dans le cas où son intégrité n'a pas été altérée.

Dans l'étape suivante V4, une valeur d'intégrité VI' est calculée à partir du message M'.

Enfin, dans une étape V5, les valeurs d'intégrité telle que récupérée dans la chaine de blocs BC et telle que calculée à partir du message M' sont comparées.

Dans le cas où ces valeurs d'intégrité VI et VI' sont identiques, l'intégrité du message à intégrité garantie et vérifiable est attestée (cas OK). Elle est sinon réfutée (cas NOK).

La figure 4 montre schématiquement le procédé d'obtention d'un rapport d'intégrité selon un mode de réalisation de l'invention.

Le procédé d'obtention comprend des étapes préliminaires de création CC d'un compte utilisateur par un utilisateur UA désireux d'utiliser le service réseau de garantie d'intégrité selon l'invention.

La première étape P1 consiste à envoyer une requête R de création de compte utilisateur à un serveur S(BC) offrant le service. En réponse le serveur S(BC) envoie, dans une étape P2, une adresse de messagerie électronique S(UA)@ dédiée au service réseau de garantie d'intégrité et à l'utilisateur UA.

Dans une réalisation de ces étapes préliminaires de création de compte, l'utilisateur envoie avantageusement simplement un message électronique à une adresse du service de garantie d'intégrité commune à tous les utilisateurs et reçoit en réponse un lien de finalisation d'inscription pointant sur une page web qui, après saisie de données personnelles de l'utilisateur, déclenche l'envoi de l'adresse de messagerie électronique dédiée au service réseau de garantie d'intégrité et à l'utilisateur. Un exemple d'une telle adresse est donné dans la suite.

Ensuite la chaine d'étape menant à l'obtention d'un rapport d'intégrité est effectuée lorsque l'utilisateur UA veut utiliser le service de garantie d'intégrité selon l'invention.

Dans une première étape E0, l'utilisateur UA rédige un message M(B@) dont l'intégrité doit être garantie à l'attention d'un utilisateur UB.

Dans une étape E1, l'utilisateur UA envoie le message M(B@) à l'adresse B@ de l'utilisateur UB (étape E10) en ajoutant dans les destinataires ou en copie l'adresse de messagerie dédiée au service réseau de garantie d'intégrité et à l'utilisateur C@=S(UA)@ (étape E11 sur la figure 4). Le message passe par l'intermédiaire d'un serveur de messagerie de l'utilisateur UA SM(UA) pour être ensuite envoyé au serveur de messagerie SM(UB) de l'utilisateur UB selon un acheminement donné dans une étape E20 puis à l'utilisateur UB dans une étape E21.

En parallèle le même message prend un acheminement différent pour arriver au serveur offrant le service selon l'invention S(BC). Ce sont donc les données d'acheminement vers le serveur implémentant l'invention qui seront présentes dans le message M(S(UA)@) pour calculer, dans une étape E30, une valeur d'intégrité selon le procédé de création d'un message à intégrité garantie et vérifiable. Cette valeur d'intégrité VI est envoyée dans une étape E31 vers une chaine de blocs BC pour enregistrement dans une étape E32. Dans une étape E33, un identifiant de transaction ID correspondant à l'enregistrement dans la chaine de blocs est retourné au serveur S(BC).

Dans une étape E34, l'identifiant est inséré dans le message M(S(UA)@) donnant un message MBC(S(UA)@). Un rapport d'intégrité RI(MBC) est alors renvoyé vers l'expéditeur, ce rapport comprenant un élément permettant d'accéder au message électronique à intégrité garantie et vérifiable MBC(S(UA)@).

Cet élément peut être le message à intégrité garantie lui-même ou un lien ou information permettant de le récupérer auprès du serveur offrant le service. L'identifiant de transaction peut être cette information dans le cas où c'est le service de garantie d'intégrité qui a stocké le message à intégrité garantie.

Ainsi plus pratiquement, si l'on considère un utilisateur UA ayant comme adresse email « utilisateurA@originalmail.com » , désirant envoyer un email à un utilisateur UB « utilisateurA@originalmail.com », nommé MIME_ORIGINAL, l'utilisateur UA met en copie de son message à destination de l'utilisateur UB son adresse email Blockchain « utilisateurA@blockchainmail.com » comme dans le message suivant:
a. Received: from 6.mo69.mail-out.yyy.net (6.mo69.mail-out.yyy.net [46.105.50.107])
b. by blockchainmail.com (Postfix) with ESMTPS id 6B5203FE86
c. for <utilisateurB@originalmail.com>; Thu, 11 Jul 2019 18:10:38 +0200 (CEST)
d. Received: from player718.ha.ovh.net (unknown [10.109.143.223])
e. by mo69.mail-out.ovh.net (Postfix) with ESMTP id 1798F600BA
f. for < utilisateurB@originalmail.com>; Thu, 11 Jul 2019 18:10:37 +0200 (CEST)
g. Received: from originalmail.com
h. (Authenticated sender: utilisateurA@originalmail.com)
i. by player718.ha.ovh.net (Postfix) with ESMTPSA id 916B37C48308
j. for <utilisateurB@originalmail.com>; Thu, 11 Jul 2019 16:10:35 +0000 (UTC)
k. From: <utilisateurA@originalmail.com>
1. To: utilisateurB @originalmail.com
m. Cc: utilisateurA@blockchainmail.com
n. Subject: test
o. Date: Thu, 11 Jul 2019 18:10:32 +0200
p. Message-ID: <005901d53803$2bac30e0$830492a0$@originalmail.com >
q. MIME-Version: 1.0
r. Content-Type: multipart/alternative;
s. boundary="----=_NextPart_000_005A_01D53813.EF354F00"
t. X-Mailer: Microsoft Outlook 16.0
u. Thread-Index: AdU4Ay16eu5N+M9dROSuT/HLnZL0sA==
v. Content-Language: fr
w. X-VR-SPAMSTATE: OK
x. X-VR-SPAMSCORE: 0
y. This is a multipart message in MIME format.
z. -----=_NextPart_000_005A_01D53813.EF354F00
aa.Content-Type: text/plain;
bb. charset="us-ascii"
cc.Content-Transfer-Encoding: 7bit
dd. Test
ee.------=_NextPart_000_005A_01D53813.EF354F00

L'objet MIME est donc reçu par le serveur de messagerie originalmail.com et blockchainmail.com.

Le serveur de messagerie originalmail.com délivre le mail (MIME_ORIGINAL) à l'utilisateur UB. Le serveur de messagerie blockchainmail.com effectue les opérations suivantes :
a. - Il calcule le HASH de l'objet MIME_ORIGINAL, nommé HASH_ORIGINAL ayant comme valeur deb8c96966727f38ae7264c44a513cc68e6a761fe2f7ebe42377afc097f13924
b. - Il enregistre dans la Blockchain le HASH_ORIGINAL qui lui retourne un identifiant de transaction contenant le HASH_ORIGINAL, cet identifiant de transaction est nommé BLOCKCHAIN_ID
c. - Cet identifiant de transaction BLOCKCHAIN_ID est rajouté dans l'en-tête de l'objet MIME_ORIGINAL, donnant un nouvel objet MIME nommé MIME_BLOCKCHAIN.

Cela donne le message suivant :
a. Received: from 6.mo69.mail-out.ovh.net (6.mo69.mail-out.yyy.net [46.105.50.107])
b. by blockchainmail.com (Postfix) with ESMTPS id 6B5203FE86
c. for <utilisateurB@originalmail.com>; Thu, 11 Jul 2019 18:10:38 +0200 (CEST)
d. Received: from player718.ha.yyy.net (unknown [10.109.143.223])
e. by mo69.mail-out.ovh.net (Postfix) with ESMTP id 1798F600BA
f. for < utilisateurB@originalmail.com>; Thu, 11 Jul 2019 18:10:37 +0200 (CEST)
g. Received: from originalmail.com
h. (Authenticated sender: utilisateurA@originalmail.com)
i. by player718.ha.ovh.net (Postfix) with ESMTPSA id 916B37C48308
j. for <utilisateurB@originalmail.com>; Thu, 11 Jul 2019 16:10:35 +0000 (UTC)
k. From: <utilisateurA@originalmail.com>
1. To: utilisateurB@originalmail.com
m. Cc: utilisateurA@blockchainmail.com
n. Subject: test
o. Date: Thu, 11 Jul 2019 18:10:32 +0200
p. Message-ID: <005901d53803$2bac30e0$830492a0$@originalmail.com>
q. MIME-Version: 1.0
r. Content-Type: multipart/alternative;
s. boundary="----=_NextPart_000_005A_01D53813.EF354F00"
t. X-Mailer: Microsoft Outlook 16.0
u. Thread-Index: AdU4Ay16eu5N+M9dROSuT/HLnZL0sA==
v. Content-Language: fr
w. Blockchain_ID : 68474654a654d56fbb6546cc847
x. X-VR-SPAMSTATE: OK
y. X-VR-SPAMSCORE: 0
z. This is a multipart message in MIME format.
aa.-----=_NextPart_000_005A_01D53813.EF354F00
bb. Content-Type: text/plain;
cc. charset="us-ascii"
dd. Content-Transfer-Encoding: 7bit
ee.Test
ff.-----=_NextPart_000_005A_01D53813.EF354F00

L'objet MIME_BLOCKCHAIN est donc identique à l'objet MIME_ORIGINAL tel qu'arrivé sur le serveur offrant le service selon l'invention mis à part l'ajout d'une nouvelle entrée dans l'en-tête ici nommée Blockchain_ID.

Le serveur de messagerie blockchainmail.com calcule le hash de l'objet MIME_BLOCKCHAIN, nommé HASH_BLOCKCHAIN ayant comme valeur d7ab9d810c05d3c54f847f2e9808a9f220d05e0e9c0cb15901b215e8b1ea82a2.

Le serveur de messagerie blockchainmail.com renvoie à l'utilisateur UA l'objet MIME_BLOCKCHAIN garantissant l'horodatage du mail et l'intégrité de son contenu, et une preuve d'émission du mail MIME_ORIGINAL à utilisateur UB.

À tout moment l'utilisateur UA peut prouver de l'intégrité du mail MIME_ORIGINAL (horodatage, traçabilité et preuve d'envoi).

Par exemple, l'utilisateur UA envoie le mail MIME_BLOCKCHAIN au serveur de messagerie blockchainmail.com. Il est ici noté qu'il est aussi possible que seul le serveur stocke le message à intégrité garantie.

Le serveur blockchainmail.com récupère dans l'en-tête l'entrée BLOCKCHAIN_ID et le retire ensuite dans l'en-tête, donnant l'objet MIME_ORIGINAL. Le serveur blockchainmail.com calcule le HASH de l'objet MIME_ORIGINAL, nommé HASH_ORIGINAL. Le serveur blockchainmail.com va récupérer les informations dans la blockchain de la transaction BLOCKCHAIN_ID, et récupère le HASH contenu dans la transaction, nommé HASH_RECUPERE. Si le HASH_RECUPERE est identique au HASH_ORIGINAL, le serveur de messagerie blockchainmail.com renvoie à l'utilisateur UA la confirmation que le mail MIME_BLOCKCHAIN est bien identique au MIME_ORIGINAL et prouve bien son authenticité.

On note ici que tout serveur ou tout dispositif ayant la possibilité de récupérer le message à intégrité garantie et ayant une connexion à la chaine de blocs selon l'invention peut mettre en oeuvre la vérification de l'intégrité du message.

Ce mode de réalisation présente l'avantage de n'utiliser que de simples envois de message électronique. Aucun élément n'a besoin d'être ajouté dans le dispositif de l'expéditeur pour mettre en oeuvre le procédé.

Dans un autre mode de réalisation, dans le cas où l'utilisateur utilise un client de messagerie type Microsoft Outlook ou autres, un module additionnel est ajouté au client de messagerie. Ce module additionnel ajoute typiquement un bouton/commande dans un ruban du client. Lorsque l'utilisateur active ce bouton lors de l'écriture d'un message électronique avant son envoi, le module additionnel procède à l'envoi automatique en parallèle de l'envoi du message électronique au destinataire. Cet envoi automatique déclenche alors la chaine d'étape E1 à E35 présentées ci-dessus.

On note ici que l'élément permettant d'accéder au message à intégrité garantie et vérifiable peut être le message lui-même ou une référence à l'identifiant de chaine de blocs ou cet identifiant lui-même. Dans ce cas, c'est le serveur offrant le service de garantie d'intégrité qui conserve le message à intégrité garantie et vérifiable pour le compte de l'utilisateur. Cette conservation peut aussi être réalisée, en quelque sorte en doublon de l'envoi du message à intégrité garantie à l'expéditeur. Cela pourra définir plusieurs types d'offres du service de garantie d'intégrité, le stockage des messages en plus par le serveur offrant le service pouvant être facturé en outre de l'envoi du message à intégrité garantie et vérifiable dans le rapport d'intégrité.

La figure 5 décrit un autre mode de réalisation d'obtention d'un rapport d'intégrité. Ce mode de réalisation met en oeuvre un module additionnel installé selon une procédure identique à l'installation du module additionnel selon le deuxième mode de réalisation décrit ci-dessus. Cette installation est illustrée par trois étapes Q1, Q2 et Q3 sur la figure 5.

Dans une première étape Q1, l'utilisateur UA requiert la création d'un compte auprès du serveur S(BC) offrant le service selon l'invention. En réponse, un module additionnel (plug-in en anglais) MA(S(UA)@) configuré avec une adresse S(UA)@ dédiée au service et à l'utilisateur est chargé sur le client de messagerie de l'utilisateur UA, dans une étape Q2. Enfin dans une étape Q3, le module additionnel est installé sur le client de messagerie.

Cela crée typiquement un bouton à actionner pour bénéficier du service selon l'invention lors de l'envoi d'un message électronique après rédaction dans une étape E0.

Quand ce bouton est actionné, quand l'utilisateur actionne la commande d'envoi du message, le module additionnel génère d'abord une étape F1 d'envoi du message M(S(UA)@) au serveur S(BC) offrant le service de garantie d'intégrité.

Quand ce bouton est actionné, avant l'envoi du message au destinataire, envoi du message électronique M(S(UA)@) à l'adresse de messagerie électronique dédiée au service réseau de garantie d'intégrité pour mise en oeuvre du procédé de création d'un message électronique à intégrité garantie et vérifiable selon l'invention comprenant les étapes F30 à F34 telles que décrites dans la figure 4. Un message à intégrité garantie et vérifiable MBC est alors obtenu et, dans une étape F35, ce message est envoyé au module additionnel pour envoi automatique avec demande d'accusé de réception, dans une étape F36, à l'adresse de destinataire B@ présente dans le message MBC par l'intermédiaire des serveurs de messagerie SM(UA) et SM(UB).

Dans une étape F37, un accusé de réception AR est envoyé au module additionnel qui le renvoie au serveur offrant le service pour constitution d'un rapport d'intégrité au sein de ce serveur, comprenant l'accusé de réception et au moins un élément permettant d'accéder au message à intégrité garantie et vérifiable MBC qui est préférentiellement le message à intégrité garantie lui-même. Le rapport d'intégrité RI(MBC) obtenu est alors envoyé à l'expéditeur.

La figure 6 décrit schématiquement deux autres modes de réalisation où l'obtention d'un rapport d'intégrité est mise en oeuvre au sein d'un serveur de messagerie offrant lui-même le service de garantie d'intégrité selon l'invention.

Dans ces modes de réalisation, le serveur de messagerie est connecté à l'utilisateur soit par un service de messagerie internet type gmail, yahoo ou autre, soit par un client de messagerie configuré avec ce serveur de messagerie.

A réception d'un message de l'utilisateur UA l'ayant envoyé dans une étape G1, le serveur de messagerie SM(UA) procède au calcul d'une valeur d'intégrité dans une étape G30. Un ensemble d'étapes G30 à G34 identiques aux étapes E30 à E34 décrites ci-dessus et correspondant au procédé de création d'un message à intégrité garantie et vérifiable sont alors effectuées en collaboration directe du serveur de messagerie SM(UA) avec une chaine de blocs BC.

Deux options O1 et O2 sont envisageables pour le fonctionnement du serveur de messagerie.

Dans l'option O1, le message M(B @) est envoyé directement à l'utilisateur UB, préférentiellement avec une demande d'accusé de réception, via un serveur de messagerie SM(UB) de l'utilisateur UB dans des étapes G12 et G13. Dans le cas optionnel où une demande d'accusé de réception a été émise, un accusé de réception est envoyé dans une étape G14 vers le serveur de messagerie SM(UA) qui pourra l'ajouter dans le rapport d'intégrité. Cet échange de demande d'accusé de réception et d'accusé de réception est une action optionnelle dans le cas où le message envoyé au destinataire est le message d'origine. Cela est cependant une caractéristique préférentielle car permet d'attester de la réception du message d'origine par l'utilisateur UB.

Dans l'option 02, c'est le message à intégrité garantie et vérifiable MBC qui est lui-même envoyé, après sa création selon l'invention à l'adresse du destinataire B@ dans une étape G22 puis G23 avec une demande d'accusé de réception AR qui est retourné dans une étape G24 le cas échéant.

Dans les deux options, un rapport d'intégrité RI(MBC) est ensuite envoyé à l'utilisateur UA sur son compte de messagerie.

On remarque enfin que diverses mises en oeuvre peuvent être réalisées selon les principes de l'invention. Notamment il a été vu que les diverses caractéristiques présentées dans les modes de réalisation du procédé d'obtention d'un rapport d'intégrité, notamment l'utilisation d'un accusé de réception, peuvent être combinées tout en reproduisant les principes de l'invention tels que définis dans le procédé de création d'un message à intégrité garantie et vérifiable selon l'invention.

## Revendications

1. Procédé de création, au sein d'un serveur offrant un service internet de garantie d'intégrité des messages électroniques, d'un message électronique à intégrité garantie et vérifiable selon le standard MIME à partir d'un message électronique selon le standard MIME comprenant, selon ce standard, un en-tête comprenant au moins des données de routage et de type de contenu, une adresse de l'expéditeur et au moins une adresse de destinataire, et un corps comprenant un contenu de message, le standard MIME permettant l'introduction, dans l'en-tête, d'un ou plusieurs champs d'extension tel que défini dans le standard MIME (extension-field en anglais dans le standard) ou défini par l'utilisateur (user-defined field), ces champs comprenant un couple formé d'au moins un tag permettant d'identifier le champ et d'une valeur,
a. ce procédé comprenant les étapes de :
b. réception du message électronique dont l'intégrité est à garantir,
c. calcul d'une valeur d'intégrité du message électronique,
d. enregistrement de la valeur d'intégrité dans une transaction d'une chaine de blocs,
e. réception d'un identifiant de transaction,
f. insertion de l'identifiant de transaction en tant que valeur associée à un tag spécifique dans un champ d'extension défini dans le standard ou défini par l'utilisateur dans l'en-tête du message électronique dont l'intégrité est à garantir, le message électronique ainsi obtenu constituant le message dont l'intégrité est garantie et vérifiable

2. Procédé de création d'un message électronique à intégrité garantie et vérifiable selon le standard MIME selon la revendication 1, dans lequel le tag spécifique est un tag créé spécifiquement pour le procédé pour définir un champ d'extension défini par l'utilisateur selon le standard MIME

3. Procédé de vérification de l'intégrité d'un message électronique à intégrité garantie et vérifiable obtenu selon le procédé de création d'un message électronique à intégrité garantie et vérifiable selon l'une des revendications précédentes, au sein d'un serveur d'une entité ayant besoin de cette vérification, ce procédé comprenant les étapes de :
a. récupération du message électronique à intégrité garantie et vérifiable, récupération de l'identifiant de transaction comme étant la valeur associée au tag spécifique dans le champ d'extension ou le champ défini par l'utilisateur utilisé par le procédé d'une des revendications précédentes,
b. récupération de la valeur d'intégrité telle qu'enregistrée dans la chaine de blocs,
c. effacement du champ d'extension ou du champ défini par l'utilisateur dans le message électronique récupéré,
d. calcul d'une valeur d'intégrité sur le message électronique ainsi obtenu,
e. comparaison de la valeur d'intégrité calculée avec la valeur d'intégrité récupérée,
f. valider l'intégrité du message lorsque les deux valeurs d'intégrité sont identiques

4. Procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'une des revendications 1 et 2, ce procédé d'obtention d'un rapport d'intégrité comprenant les étapes préliminaires suivantes :
a. création d'un compte utilisateur par un utilisateur auprès du service réseau de garantie d'intégrité,
b. réception d'une adresse de messagerie électronique dédiée au service réseau de garantie d'intégrité et à l'utilisateur,
c. puis, lorsque l'utilisateur veut faire garantir l'intégrité d'un message électronique, les étapes suivantes :
d. rédaction par un expéditeur du message électronique dont l'intégrité doit être garantie,
e. envoi du message dont l'intégrité doit être garantie à au moins une adresse de messagerie électronique de destination et à l'adresse de messagerie électronique dédiée au service réseau de garantie d'intégrité et à l'utilisateur, ce dernier envoi permettant la mise en oeuvre du procédé de création d'un message électronique à intégrité garantie et vérifiable selon l'une des revendications 1 et 2 au sein d'un serveur offrant un service réseau de garantie d'intégrité à réception du message à l'adresse de messagerie électronique dédiée au service réseau de garantie d'intégrité et à l'utilisateur,
f. réception d'un rapport d'intégrité comprenant au moins un élément permettant d'accéder au message électronique à intégrité garantie et vérifiable selon le standard MIME créé par le service réseau de garantie d'intégrité

5. Procédé d'obtention d'un rapport d'intégrité selon la revendication 4, dans lequel la création du compte utilisateur comprend les sous-étapes suivantes :
a. envoi d'un message électronique à une adresse de messagerie électronique du service réseau de garantie d'intégrité,
b. réception d'un message électronique comprenant un lien de finalisation de l'inscription sur une page web du service réseau de garantie d'intégrité,
c. finalisation de l'inscription par l'intermédiaire de la page web du service réseau de garantie d'intégrité déclenchant l'envoi de l'adresse de messagerie électronique dédiée au service réseau de garantie d'intégrité à utiliser en destinataire pour les envois ultérieurs de message électronique dont l'intégrité doit être garantie

6. Procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'une des revendications 1 et 2, ce procédé d'obtention d'un rapport d'intégrité étant mis en oeuvre à partir d'un dispositif d'un utilisateur utilisant un client de messagerie, le procédé comprenant les étapes préliminaires suivantes :
a. création d'un compte utilisateur par un utilisateur auprès du service réseau de garantie d'intégrité,
b. installation d'un module additionnel dédié au service réseau de garantie d'intégrité sur un client de messagerie générant l'insertion d'une commande dédiée à la garantie d'intégrité sur le client de messagerie, le module additionnel étant configuré avec une adresse de messagerie électronique dédiée au service réseau de garantie d'intégrité à l'utilisateur,
c. puis, lorsque l'utilisateur veut faire garantir l'intégrité d'un message électronique, les étapes suivantes :
d. rédaction du message électronique dont l'intégrité doit être garantie,
e. actionnement de la commande dédiée à la garantie d'intégrité lors de la rédaction du message déclenchant, lorsqu'elle est activée, lors de l'envoi du message dont l'intégrité doit être garantie à au moins une adresse de messagerie électronique de destination, l'envoi automatique en parallèle à l'adresse de messagerie électronique dédiée au service réseau de garantie d'intégrité et à l'utilisateur pour mise en oeuvre du procédé de création d'un message électronique à intégrité garantie et vérifiable selon l'une des revendications 1 et 2,
f. réception d'un rapport d'intégrité comprenant au moins un élément permettant d'accéder au message électronique à intégrité garantie et vérifiable selon le standard MIME créé par le service réseau de garantie d'intégrité.

7. Procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'une des revendications 1 et 2, ce procédé d'obtention d'un rapport d'intégrité étant mis en oeuvre à partir d'un dispositif d'un utilisateur utilisant un client de messagerie,
a. le procédé comprenant une étape préliminaire de configuration du client de messagerie avec un serveur de messagerie offrant lui-même le service internet de garantie d'intégrité des messages électroniques,
b. puis les étapes suivantes :
c. - rédaction du message électronique dont l'intégrité doit être garantie à l'attention d'un destinataire,
d. - envoi du message électronique par l'intermédiaire du serveur de messagerie défini dans la configuration du client de messagerie, ce dernier envoyant directement le message au destinataire et effectuant lui-même le procédé de création d'un message électronique à intégrité garantie et vérifiable selon l'une des revendications 1 et 2 et la construction d'un rapport d'intégrité, pour envoi au client de messagerie, comprenant au moins un élément permettant d'accéder au message électronique à intégrité garantie et vérifiable selon le standard MIME créé par le service réseau de garantie d'intégrité,
e. - réception du rapport d'intégrité par le client de messagerie.

8. Procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'une des revendications 1 et 2, ce procédé d'obtention d'un rapport d'intégrité étant mis en oeuvre à partir d'un dispositif d'un utilisateur utilisant un compte d'un service internet de messagerie dont les serveurs de messagerie offrent eux-mêmes le service internet de garantie d'intégrité des messages électroniques, le procédé comprenant, lorsque l'utilisateur veut faire garantir l'intégrité d'un message électronique, les étapes suivantes :
a. - rédaction du message électronique dont l'intégrité doit être garantie à l'attention d'un destinataire en signalant le besoin de garantie d'intégrité dans le service internet de messagerie,
b. - envoi du message électronique par l'intermédiaire du serveur de messagerie, ce dernier envoyant directement le message au destinataire et effectuant lui-même le procédé de création d'un message électronique à intégrité garantie et vérifiable selon l'une des revendications 1 et 2 et la construction d'un rapport d'intégrité, pour envoi au compte de l'utilisateur, comprenant au moins un élément permettant d'accéder au message électronique à intégrité garantie et vérifiable selon le standard MIME créé par le service réseau de garantie d'intégrité,
c. - réception du rapport d'intégrité dans le compte de l'utilisateur.

9. Procédé d'obtention d'un rapport d'intégrité selon l'une des revendications 4 à 8, dans lequel, une demande d'accusé de réception étant ajoutée dans le message dont l'intégrité doit être garantie, l'accusé de réception obtenu est inclus dans le rapport d'intégrité.

10. Procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'une des revendications 1 et 2, ce procédé d'obtention d'un rapport d'intégrité étant mis en oeuvre à partir d'un dispositif d'un utilisateur utilisant un client de messagerie, le procédé comprenant les étapes préliminaires suivantes :
a. création d'un compte utilisateur par un utilisateur auprès du service réseau de garantie d'intégrité,
b. installation d'un module additionnel dédié au service réseau de garantie d'intégrité sur le client de messagerie générant l'insertion d'une commande dédiée à la garantie d'intégrité sur le client de messagerie, le module additionnel étant configuré avec une adresse de messagerie électronique dédiée au service réseau de garantie d'intégrité à l'utilisateur,
c. puis, lorsque l'utilisateur veut faire garantir l'intégrité d'un message électronique, les étapes suivantes :
d. rédaction du message électronique dont l'intégrité doit être garantie,
e. à l'activation de la commande d'envoi du message électronique, avant l'envoi du message au destinataire, envoi du message électronique à l'adresse de messagerie électronique dédiée au service réseau de garantie d'intégrité pour mise en oeuvre du procédé de création d'un message électronique à intégrité garantie et vérifiable selon l'une des revendications 1 et 2,
f. réception, par le module additionnel, du message électronique à intégrité garantie et vérifiable,
g. envoi, par le module additionnel, du message électronique à intégrité garantie et vérifiable au destinataire avec une demande d'accusé de réception,
h. réception de l'accusé de réception,
i. le rapport d'intégrité étant constitué à minima de l'accusé de réception et du message électronique à intégrité garantie et vérifiable ou de l'accusé de réception et d'un élément permettant d'accéder au message électronique à intégrité garantie et vérifiable selon le standard MIME créé par le service réseau de garantie d'intégrité.

11. Procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'une des revendications 1 et 2, ce procédé d'obtention d'un rapport d'intégrité étant mis en oeuvre à partir d'un dispositif d'un utilisateur utilisant un client de messagerie,
a. le procédé comprenant une étape préliminaire de configuration du client de messagerie avec un serveur de messagerie offrant lui-même le service internet de garantie d'intégrité des messages électroniques,
b. puis, lorsque l'utilisateur veut faire garantir l'intégrité d'un message électronique, les étapes suivantes :
c. - rédaction du message électronique dont l'intégrité doit être garantie à l'attention d'un destinataire,
d. - envoi du message électronique par l'intermédiaire du serveur de messagerie défini dans la configuration du client de messagerie, ce dernier effectuant lui-même le procédé de création d'un message électronique à intégrité garantie et vérifiable selon l'une des revendications 1 et 2, puis envoyant, avec demande d'accusé de réception, le message électronique à intégrité garantie et vérifiable au destinataire, réceptionnant l'accusé de réception, et enfin, construisant, pour envoi au client de messagerie, un rapport d'intégrité avec au moins l'accusé de réception et un élément permettant d'accéder au message électronique à intégrité garantie et vérifiable selon le standard MIME créé par le service réseau de garantie d'intégrité,
e. - réception du rapport d'intégrité par le client de messagerie.

12. Procédé d'obtention d'un rapport d'intégrité pour un message électronique dont l'intégrité doit être garantie auprès d'un service réseau de garantie d'intégrité utilisant un procédé de création d'un message électronique à intégrité garantie et vérifiable selon le standard MIME selon l'une des revendications 1 et 2, ce procédé d'obtention d'un rapport d'intégrité étant mis en oeuvre à partir d'un dispositif d'un utilisateur utilisant un compte d'un service internet de messagerie dont les serveurs de messagerie offrent eux-mêmes le service internet de garantie d'intégrité des messages électroniques, le procédé comprenant, lorsque l'utilisateur veut faire garantir l'intégrité d'un message électronique, les étapes suivantes :
a. - rédaction du message électronique dont l'intégrité doit être garantie à l'attention d'un destinataire en signalant le besoin de garantie d'intégrité dans le service internet de messagerie,
b. - envoi du message électronique par l'intermédiaire du serveur de messagerie effectuant lui-même le procédé de création d'un message électronique à intégrité garantie et vérifiable selon l'une des revendications 1 et 2, ce serveur de messagerie envoyant, avec demande d'accusé de réception, le message électronique à intégrité garantie et vérifiable au destinataire, réceptionnant l'accusé de réception, et enfin, construisant, pour envoi au compte de l'utilisateur, un rapport d'intégrité avec au moins l'accusé de réception et un élément permettant d'accéder au message électronique à intégrité garantie et vérifiable selon le standard MIME créé par le service réseau de garantie d'intégrité,
c. - réception du rapport d'intégrité dans le compte de l'utilisateur.

13. Procédé d'obtention d'un rapport d'intégrité selon l'une des revendications 4 à 12, dans lequel l'élément permettant d'accéder au message électronique à intégrité garantie et vérifiable selon le standard MIME créé par le service réseau de garantie d'intégrité est le message électronique à intégrité garantie et vérifiable lui-même.

14. Procédé d'obtention d'un rapport d'intégrité selon l'une des revendications 4 à 12, dans lequel l'élément permettant d'accéder au message électronique à intégrité garantie et vérifiable selon le standard MIME créé par le service réseau de garantie d'intégrité est l'identifiant de transaction dans la chaine de blocs, cet identifiant étant stocké associé au message à intégrité garantie au sein d'un serveur permettant la vérification de l'intégrité du message.

15. Serveur offrant un service internet de garantie d'intégrité des messages électroniques par création d'un message électronique à intégrité garantie et vérifiable selon le standard MIME à partir d'un message électronique selon le standard MIME comprenant, selon ce standard, un en-tête comprenant au moins des données de routage et de type de contenu, une adresse de l'expéditeur et au moins une adresse de destinataire, et un corps comprenant un contenu de message, le standard MIME permettant l'introduction, dans l'en-tête, d'un ou plusieurs champs d'extension (extension-field en anglais dans le standard) ou d'un ou plusieurs champs définis par l'utilisateur (user-defined field), ces champs comprenant un couple formé d'au moins un tag permettant d'identifier le champ et d'une valeur, ledit serveur étant adapté pour la réception de message électroniques dont l'intégrité est à garantir, ledit serveur comprenant un module de calcul d'une valeur d'intégrité à partir du message électronique reçu, ledit serveur ayant accès à une chaine de blocs pour enregistrer la valeur d'intégrité dans une transaction de cette chaine de blocs et en recevoir un identifiant de transaction, ledit serveur étant adapté pour insérer l'identifiant de transaction en tant que valeur associée à un tag spécifique dans un champ d'extension ou dans un champ défini par l'utilisateur dans l'en-tête du message électronique dont l'intégrité est à garantir, le message électronique ainsi obtenu constituant le message dont l'intégrité est garantie et vérifiable.

16. Serveur selon la revendication 15, **caractérisé en ce qu'**il est le serveur de messagerie de l'expéditeur ou du destinataire.

17. Client de messagerie comprenant un module additionnel dédié au service réseau de garantie d'intégrité sur un client de messagerie générant l'insertion d'une commande dédiée à la garantie d'intégrité sur le client de messagerie, le module additionnel étant configuré avec une adresse de messagerie électronique dédiée au service réseau de garantie d'intégrité à l'utilisateur, et adapté pour mettre en oeuvre le procédé d'obtention d'un rapport d'intégrité de l'une des revendications 6 et 10.

18. Dispositif comprenant le client de messagerie selon la revendication 17.

## Patentansprüche

1. Verfahren, um in einem Server, der einen Internetdienst zur Gewährleistung der Integrität elektronischer Meldungen anbietet, eine elektronische Meldung mit garantierter und überprüfbarer Integrität gemäß dem MIME-Standard ausgehend von einer elektronischen Meldung gemäß dem MIME-Standard zu erzeugen, die gemäß diesem Standard einen Header umfasst, der mindestens Daten zum Routing und zum Typ des Inhalts umfasst, eine Absenderadresse und mindestens eine Empfängeradresse, und einen Körper, der den Inhalt der Meldung umfasst, wobei der MIME-Standard die Einführung eines oder mehrerer Erweiterungsfelder in den Header ermöglicht, die im MIME-Standard definiert sind (Erweiterungsfeld) oder vom Benutzer definiert werden (benutzerdefiniertes Feld), wobei diese Felder ein Paar umfassen, das aus mindestens einem Tag, das die Identifizierung des Feldes ermöglicht, und einem Wert besteht,
a. dieser Prozess umfasst die folgenden Schritte:
b. Empfangen der elektronischen Meldung, deren Integrität gewährleistet sein muss,
c. Berechnen eines Integritätswertes für elektronische Meldungen,
d. Erfassen des Integritätswertes in einer Blockchain-Transaktion,
e. Empfangen eines Identifikators für die Transaktion,
f. Einfügen des Identifikators der Transaktion als einem bestimmten Tag zugeordneter Wert in ein im Standard definiertes oder vom Benutzer definiertes Erweiterungsfeld im Header der elektronischen Meldung, deren Integrität garantiert werden soll, wobei die so erhaltene elektronische Meldung die Meldung bildet, deren Integrität garantiert und überprüfbar ist.

2. Verfahren zum Erstellen einer elektronischen Meldung mit garantierter und überprüfbarer Integrität gemäß dem MIME-Standard nach Anspruch 1, wobei das spezifische Tag ein speziell für das Verfahren erstelltes Tag ist, um ein benutzerdefiniertes Erweiterungsfeld gemäß dem MIME-Standard zu definieren.

3. Verfahren zum Verifizieren der Integrität einer elektronischen Meldung mit garantierter und überprüfbarer Integrität, erhalten nach dem Verfahren zum Erzeugen einer elektronischen Meldung mit garantierter und überprüfbarer Integrität nach einem der vorstehenden Ansprüche, innerhalb eines Servers einer Einheit, die diese Verifizierung benötigt, wobei dieses Verfahren die folgenden Schritte umfasst:
a. Wiederherstellen der elektronischen Meldung mit garantierter und überprüfbarer Integrität, Wiederherstellen des Transaktionsidentifikators als den Wert, der dem spezifischen Tag in dem Erweiterungsfeld oder dem benutzerdefinierten Feld zugeordnet ist, das von dem Verfahren nach einem der vorstehenden Ansprüche verwendet wird,
b. Wiederherstellen des Integritätswertes, wie er in der Blockchain aufgezeichnet ist,
c. Löschen des Erweiterungsfeldes oder des benutzerdefinierten Feldes in der wiederhergestellten E-Mail-Meldung,
d. Berechnen eines Integritätswertes für die so erhaltene elektronische Meldung,
e. Vergleichen des berechneten Integritätswertes mit dem wiederhergestellten Integritätswert,
f. Überprüfen der Integrität der Meldung, wenn die beiden Integritätswerte identisch sind.

4. Verfahren zum Erhalten eines Integritätsberichts für eine elektronische Meldung, deren Integrität mit einem Netzwerkdienst mit Integritätsgarantie garantiert werden soll, unter Verwendung eines Verfahrens zum Erstellen einer elektronischen Meldung mit garantierter und überprüfbarer Integrität nach dem MIME-Standard nach einem der Ansprüche 1 und 2, wobei dieses Verfahren zum Erhalten eines Integritätsberichts die folgenden vorbereitenden Schritte umfasst:
a. Erstellen eines Benutzerkontos durch einen Benutzer mit der Integritätsgarantie Netzwerkdienst,
b. Empfangen einer E-Mail-Adresse, die der Integritätsgarantie des Netzwerkdienstes und dem Benutzer entsprechend ist,
c. dann, wenn der Benutzer die Integrität einer elektronischen Meldung garantieren möchte, die folgenden Schritte:
d. Erstellen einer elektronischen Meldung durch einen Absender, deren Integrität gewährleistet sein muss,
e. Senden der Meldung, deren Integrität garantiert werden soll, an mindestens eine E-Mail-Adresse und an die dem Netzwerkdienst mit Integritätsgarantie entsprechende E-Mail-Adresse sowie an den Benutzer, wobei dieses Senden die Implementierung des Verfahrens zur Erstellung einer elektronischen Meldung mit garantierter und überprüfbarer Integrität nach einem der Ansprüche 1 und 2 in einem Server ermöglicht, der einen Netzwerkdienst mit Integritätsgarantie anbietet, sobald die Meldung an der dem Netzwerkdienst mit Integritätsgarantie entsprechenden E-Mail-Adresse sowie an den Benutzer eingegangen ist,
f. Empfangen eines Integritätsberichts, der mindestens ein Element umfasst, das den Zugang zu der elektronischen Meldung mit garantierter Integrität ermöglicht und nach dem vom Netzwerkdienst mit Integritätsgarantie erstellten MIME-Standard überprüfbar ist.

5. Verfahren zum Erhalten eines Integritätsberichts nach Anspruch 4, wobei die Erstellung des Benutzerkontos die folgenden Unterschritte umfasst:
a. Senden einer elektronischen Meldung an eine elektronische Meldeadresse des Netzwerkdienstes, der die Integrität garantiert,
b. Empfangen einer elektronischen Meldung, die eine Verbindung zum Abschluss der Registrierung auf einer Webseite des Netzwerkdienstes für Integritätsgarantien enthält,
c. Abschließen der Registrierung über die Webseite des Netzwerkdienstes Integritätsgarantie, die die Übermittlung der dem Netzwerkdienst Integritätsgarantie entsprechenden E-Mail-Adresse auslöst, die als Empfänger für nachfolgende Sendungen elektronischer Meldungen verwendet wird, deren Integrität garantiert werden muss.

6. Verfahren zum Erhalten eines Integritätsberichts für eine elektronische Meldung, deren Integrität durch einen Netzwerkdienst mit Integritätsgarantie garantiert werden muss, unter Verwendung eines Verfahrens zur Erzeugung einer elektronischen Meldung mit garantierter und überprüfbarer Integrität gemäß dem MIME-Standard nach einem der Ansprüche 1 und 2, wobei dieses Verfahren zum Erhalten eines Integritätsberichts von einer Benutzervorrichtung unter Verwendung eines Messaging-Clients implementiert wird, wobei das Verfahren die folgenden vorbereitenden Schritte umfasst:
a. Erstellen eines Benutzerkontos durch einen Benutzer mit der Integritätsgarantie Netzwerkdienst,
b. Installieren eines zusätzlichen Bestimmungsmoduls für den Netzwerkdienst der Integritätsgarantie auf einem E-Mail-Client, das das Einfügen eines der Integritätsgarantie entsprechenden Befehls auf dem E-Mail-Client erzeugt, wobei das zusätzliche Modul mit einer dem Netzwerkdienst der Integritätsgarantie entsprechenden E-Mail-Adresse für den Benutzer konfiguriert ist,
c. dann, wenn der Benutzer die Integrität einer elektronischen Meldung garantieren möchte, die folgenden Schritte:
d. Erstellen der elektronischen Meldung, deren Integrität gewährleistet sein muss,
e. Aktivieren des der Integritätsgarantie gewidmeten Befehls beim Schreiben der Meldung, der, wenn er aktiviert ist, wenn die Meldung, deren Integrität garantiert werden muss, an mindestens eine Zieladresse für elektronische Nachrichten gesendet wird, das automatische parallele Senden an die dem Netzwerkdienst der Integritätsgarantie entsprechende Adresse für elektronische Nachrichten und an den Benutzer zur Implementierung des Verfahrens zur Erstellung einer elektronischen Meldung mit garantierter und überprüfbarer Integrität nach einem der Ansprüche 1 und 2 auslöst,
f. Empfangen eines Integritätsberichts, der mindestens ein Element umfasst, das den Zugang zu der elektronischen Meldung mit garantierter Integrität ermöglicht und nach dem vom Netzwerkdienst mit Integritätsgarantie erstellten MIME-Standard überprüfbar ist.

7. Verfahren zum Erhalten eines Integritätsberichts für eine elektronische Meldung, deren Integrität durch einen Netzwerkdienst mit Integritätsgarantie garantiert werden muss, unter Verwendung eines Verfahrens zur Erzeugung einer elektronischen Meldung mit garantierter und überprüfbarer Integrität gemäß dem MIME-Standard nach einem der Ansprüche 1 und 2, wobei dieses Verfahren zum Erhalten eines Integritätsberichts von einer Benutzervorrichtung unter Verwendung eines Messaging-Clients implementiert wird,
a. wobei das Verfahren einen einleitenden Schritt umfasst, bei dem der Messaging-Client mit einem Nachrichtenserver konfiguriert wird, der selbst den Internetdienst zur Gewährleistung der Integrität elektronischer Meldungen anbietet,
b. dann die folgenden Schritte:
c. - Erstellen der elektronischen Meldung, deren Unversehrtheit für einen Empfänger gewährleistet sein muss,
d. - Senden der elektronischen Nachricht über den in der Konfiguration des Messaging-Clients definierten Nachrichtenserver, wobei dieser die Nachricht direkt an den Empfänger sendet und selbst den Prozess der Erstellung einer elektronischen Nachricht mit garantierter und überprüfbarer Integrität nach einem der Ansprüche 1 und 2 durchführt und einen Integritätsbericht zum Senden an den Messaging-Client erstellt, der mindestens ein Element umfasst, das den Zugang zu der elektronischen Nachricht mit garantierter und überprüfbarer Integrität gemäß dem vom Netzwerkdienst mit Integritätsgarantie erstellten MIME-Standard ermöglicht,
e. - Empfangen des Integritätsberichts durch den E-Mail-Client.

8. Verfahren zum Erhalten eines Integritätsberichts für eine elektronische Nachricht, deren Integrität durch einen Netzwerkdienst mit Integritätsgarantie garantiert werden muss, unter Verwendung eines Verfahrens zur Erzeugung einer elektronischen Nachricht mit garantierter und überprüfbarer Integrität gemäß dem MIME-Standard nach einem der Ansprüche 1 und 2, wobei dieses Verfahren zum Erhalten eines Integritätsberichts von einer Vorrichtung eines Benutzers aus implementiert wird, der ein Konto eines Internet-Nachrichtendienstes verwendet, dessen Nachrichtenserver selbst den Internetdienst zur Garantie der Integrität elektronischer Nachrichten anbieten, wobei das Verfahren, wenn der Benutzer die Integrität einer elektronischen Nachricht garantiert haben möchte, die folgenden Schritte aufweist:
a. - Erstellen der elektronischen Meldung, deren Integrität zuhanden eines Empfängers garantiert werden muss, indem die Notwendigkeit von Integritätsgarantien im Internetnachrichtendienst angegeben wird,
b. - Senden der elektronischen Meldung über den Nachrichtenserver, wobei dieser die Meldung direkt an den Empfänger sendet und selbst den Prozess der Erstellung einer elektronischen Meldung mit garantierter und überprüfbarer Integrität nach einem der Ansprüche 1 und 2 durchführt und einen Integritätsbericht erstellt, um ihn an das Konto des Benutzers zu senden, der mindestens ein Element umfasst, das den Zugang zu der elektronischen Meldung mit garantierter und überprüfbarer Integrität gemäß dem vom Netzwerkdienst mit Integritätsgarantie erstellten MIME-Standard ermöglicht,
c. - Empfangen des Integritätsberichts im Konto des Benutzers.

9. Verfahren zum Erhalten eines Integritätsberichts nach einem der Ansprüche 4 bis 8, bei dem der Meldung, deren Integrität gewährleistet werden soll, eine Anfrage zur Bestätigung hinzugefügt wird und die erhaltene Bestätigung in den Integritätsbericht eingeschlossen wird.

10. Verfahren zum Erhalten eines Integritätsberichts für eine elektronische Meldung, deren Integrität durch einen Netzwerkdienst mit Integritätsgarantie garantiert werden muss, unter Verwendung eines Verfahrens zur Erzeugung einer elektronischen Meldung mit garantierter und überprüfbarer Integrität gemäß dem MIME-Standard nach einem der Ansprüche 1 und 2, wobei dieses Verfahren zum Erhalten eines Integritätsberichts von einer Benutzervorrichtung unter Verwendung eines Messaging-Clients implementiert wird, wobei das Verfahren die folgenden vorbereitenden Schritte umfasst:
a. Erstellen eines Benutzerkontos durch einen Benutzer mit der Integritätsgarantie Netzwerkdienst,
b. Installieren eines zusätzlichen Bestimmungsmoduls für den Netzwerkdienst der Integritätsgarantie auf dem E-Mail-Client, das das Einfügen eines der Integritätsgarantie entsprechenden Befehls auf dem E-Mail-Client erzeugt, wobei das zusätzliche Modul mit einer dem Netzwerkdienst der Integritätsgarantie entsprechenden E-Mail-Adresse für den Benutzer konfiguriert ist,
c. dann, wenn der Benutzer die Integrität einer elektronischen Meldung garantieren möchte, die folgenden Schritte:
d. Erstellen der elektronischen Meldung, deren Integrität gewährleistet sein muss,
e. bei Aktivierung des Befehls zum Senden der elektronischen Meldung, vor dem Senden der Meldung an den Empfänger, Senden der elektronischen Meldung an die dem Netzwerkdienst mit Integritätsgarantie entsprechende Adresse für die Implementierung des Verfahrens zur Erstellung einer elektronischen Meldung mit garantierter und überprüfbarer Integrität nach einem der Ansprüche 1 und 2,
f. Empfangen der elektronischen Meldung mit garantierter und überprüfbarer Integrität durch das zusätzliche Modul,
g. Senden der elektronischen Meldung mit garantierter und überprüfbarer Integrität durch das zusätzliche Modul an den Empfänger mit einer Anfrage zur Empfangsbestätigung,
h. Empfangen der Empfangsbestätigung,
i. den Integritätsbericht, der mindestens aus der Empfangsbestätigung und der elektronischen Meldung mit garantierter und überprüfbarer Integrität oder der Empfangsbestätigung und einem Element besteht, das den Zugang zu der elektronischen Meldung mit garantierter und überprüfbarer Integrität gemäß dem vom Netzwerkdienst mit Integritätsgarantie erstellten MIME-Standard ermöglicht.

11. Verfahren zum Erhalten eines Integritätsberichts für eine elektronische Meldung, deren Integrität durch einen Netzwerkdienst mit Integritätsgarantie garantiert werden muss, unter Verwendung eines Verfahrens zur Erzeugung einer elektronischen Meldung mit garantierter und überprüfbarer Integrität gemäß dem MIME-Standard nach einem der Ansprüche 1 und 2, wobei dieses Verfahren zum Erhalten eines Integritätsberichts von einer Benutzervorrichtung unter Verwendung eines Messaging-Clients implementiert wird,
a. wobei das Verfahren einen einleitenden Schritt umfasst, bei dem der Messaging-Client mit einem Nachrichtenserver konfiguriert wird, der selbst den Internetdienst zur Gewährleistung der Integrität elektronischer Meldungen anbietet,
b. dann, wenn der Benutzer die Integrität einer elektronischen Meldung garantieren möchte, die folgenden Schritte:
c. - Erstellen der elektronischen Meldung, deren Unversehrtheit für einen Empfänger gewährleistet sein muss,
d. - Senden der elektronischen Nachricht über den in der Konfiguration des Nachrichtenservers definierten Nachrichtenserver, wobei dieser selbst den Prozess der Erzeugung einer elektronischen Nachricht mit garantierter und überprüfbarer Integrität gemäß einem der Ansprüche 1 und 2 durchführt, dann Senden der elektronischen Nachricht mit garantierter und überprüfbarer Integrität an den Empfänger mit einer Anfrage auf Empfangsbestätigung, Empfangen der Empfangsbestätigung und schließlich Erstellen eines Integritätsberichts, der mindestens die Empfangsbestätigung und ein Element enthält, das den Zugang zu der elektronischen Meldung mit garantierter und überprüfbarer Integrität gemäß dem vom Netzwerkdienst mit Integritätsgarantie erstellten MIME-Standard ermöglicht, zum Senden an den Empfänger,
e. - Empfangen des Integritätsberichts durch den E-Mail-Client.

12. Verfahren zum Erhalten eines Integritätsberichts für eine elektronische Nachricht, deren Integrität durch einen Netzwerkdienst mit Integritätsgarantie garantiert werden muss, unter Verwendung eines Verfahrens zur Erzeugung einer elektronischen Nachricht mit garantierter und überprüfbarer Integrität gemäß dem MIME-Standard nach einem der Ansprüche 1 und 2, wobei dieses Verfahren zum Erhalten eines Integritätsberichts von einer Vorrichtung eines Benutzers aus implementiert wird, der ein Konto eines Internet-Nachrichtendienstes verwendet, dessen Nachrichtenserver selbst den Internetdienst zur Garantie der Integrität elektronischer Nachrichten anbieten, wobei das Verfahren, wenn der Benutzer die Integrität einer elektronischen Nachricht garantiert haben möchte, die folgenden Schritte aufweist:
a. - Erstellen der elektronischen Meldung, deren Integrität zuhanden eines Empfängers garantiert werden muss, indem die Notwendigkeit von Integritätsgarantien im Internetnachrichtendienst angegeben wird,
b. - Senden der elektronischen Nachricht über den Nachrichtenserver, der selbst den Prozess der Erstellung einer elektronischen Nachricht mit garantierter und überprüfbarer Integrität nach einem der Ansprüche 1 und 2 durchführt, wobei dieser Nachrichtenserver die elektronische Nachricht mit garantierter und überprüfbarer Integrität mit einer Anfrage nach einer Empfangsbestätigung an den Adressaten sendet, Empfangen der Empfangsbestätigung und schließlich Erstellen einer Integritätsmeldung, die mindestens die Empfangsbestätigung und ein Element enthält, das den Zugang zu der elektronischen Nachricht mit garantierter und überprüfbarer Integrität gemäß dem vom Netzwerkdienst mit Integritätsgarantie erstellten MIME-Standard ermöglicht, zum Senden an das Konto des Benutzers,
c. - Empfangen des Integritätsberichts im Konto des Benutzers.

13. Verfahren zum Erhalten eines Integritätsberichts nach einem der Ansprüche 4 bis 12, bei dem das Element, das den Zugang zu der elektronischen Meldung mit garantierter und überprüfbarer Integrität gemäß dem vom Netzwerkdienst mit Integritätsgarantie geschaffenen MIME-Standard ermöglicht, die elektronische Meldung mit garantierter und überprüfbarer Integrität selbst ist.

14. Verfahren zum Erhalten eines Integritätsberichts nach einem der Ansprüche 4 bis 12, bei dem das Element, das den Zugang zu der elektronischen Meldung mit garantierter Integrität ermöglicht und gemäß dem vom Netzwerkdienst für die Integritätsgarantie geschaffenen MIME-Standard überprüfbar ist, der Identifikator der Transaktion in der Blockchain ist, wobei dieser Identifikator der Meldung mit garantierter Integrität zugeordnet in einem Server gespeichert ist, der die Verifizierung der Integrität der Meldung ermöglicht.

15. Server, der einen Internetdienst anbietet, um die Integrität elektronischer Nachrichten zu garantieren, indem er eine elektronische Nachricht mit garantierter und überprüfbarer Integrität gemäß dem MIME-Standard ausgehend von einer elektronischen Nachricht gemäß dem MIME-Standard erzeugt, die gemäß diesem Standard einen Header umfasst, der mindestens Daten zum Routing und zum Typ des Inhalts, eine Absenderadresse und mindestens eine Empfängeradresse sowie einen Körper umfasst, der einen Nachrichteninhalt enthält, wobei der MIME-Standard die Einführung eines oder mehrerer Erweiterungsfelder oder eines oder mehrerer benutzerdefinierter Felder in den Header ermöglicht, wobei diese Felder ein Paar umfassen, das aus mindestens einem Tag, der die Identifizierung des Feldes ermöglicht, und einem Wert besteht, der Server eingerichtet ist, um elektronische Meldungen zu empfangen, deren Integrität garantiert werden soll, wobei der Server ein Modul zur Berechnung eines Integritätswerts ausgehend von der empfangenen elektronischen Meldung umfasst, wobei der Server Zugang zu einer Blockchain hat, um den Integritätswert in einer Transaktion dieser Blockchain zu speichern und einen Identifikator der Transaktion zu empfangen, wobei der Server eingerichtet ist, um den Identifikator der Transaktion als einen einem bestimmten Tag zugeordneten Wert in ein Erweiterungsfeld oder in ein vom Benutzer definiertes Feld im Header der elektronischen Meldung, deren Integrität garantiert werden soll, einzufügen, wobei die so erhaltene elektronische Meldung die Meldung bildet, deren Integrität garantiert und überprüfbar ist.

16. Server nach Anspruch 15, **dadurch gekennzeichnet, dass** es sich um den Mailserver des Absenders oder des Empfängers handelt.

17. Messaging-Client, der ein zusätzliches Modul umfasst, das für den Netzwerkdienst der Integritätsgarantie auf einem Messaging-Client eingerichtet ist, der die Einfügung eines Befehls erzeugt, der für die Integritätsgarantie auf dem Messaging-Client eingerichtet ist, wobei das zusätzliche Modul mit einer elektronischen E-Mail-Adresse konfiguriert ist, die für den Netzwerkdienst der Integritätsgarantie für den Benutzer eingerichtet ist, und eingerichtet ist, um das Verfahren zum Erhalt eines Integritätsberichts nach einem der Ansprüche 6 und 10 zu implementieren.

18. Vorrichtung, die den E-Mail-Client nach Anspruch 17 umfasst.

## Claims

1. A method for creating, within a server providing an Internet service for guaranteeing the integrity of electronic messages, an electronic message the integrity of which is guaranteed and verifiable according to the MIME standard based on an electronic message according to the MIME standard comprising, according to this standard, a header comprising at least data regarding routing and regarding content type, an address of the sender and at least one recipient address, and a body comprising a message content, the MIME standard allowing the insertion, into the header, of one or more extension fields as defined in the MIME standard or user-defined fields, these fields comprising a pair formed of at least one tag allowing identifying the field and of a value,
a. this method comprising the steps of:
b. receiving the electronic message the integrity of which is to be guaranteed,
c. calculating an integrity value of the electronic message,
d. storing the integrity value in a transaction of a blockchain,
e. receiving a transaction identifier,
f. inserting the transaction identifier as the value associated with a specific tag in an extension field defined in the standard or user-defined field in the header of the electronic message the integrity of which is to be guaranteed, the electronic message thus obtained constituting the message the integrity of which is guaranteed and verifiable.

2. The method for creating an electronic message the integrity of which is guaranteed and verifiable according to the MIME standard according to claim 1, wherein the specific tag is a tag created specifically for the method to define a user-defined extension field according to the MIME standard.

3. A method for verifying the integrity of an electronic message the integrity of which is guaranteed and verifiable obtained according to the method for creating an electronic message the integrity of which is guaranteed and verifiable according to one of the preceding claims, within a server of an entity needing this verification, this method comprising the steps of:
a. recovering the electronic message the integrity of which is guaranteed and verifiable, recovering the transaction identifier as being the value associated with the specific tag in the extension field or the user-defined field used by the method of one of the preceding claims,
b. recovering the integrity value as stored in the blockchain,
c. erasing the extension field or the user-defined field in the recovered electronic message,
d. calculating an integrity value on the electronic message thus obtained,
e. comparing the calculated integrity value with the recovered integrity value,
f. validating the message integrity when both integrity values are identical.

4. A method for obtaining an integrity report for an electronic message the integrity of which is to be guaranteed from an integrity guarantee network service using a method for creating an electronic message the integrity of which is guaranteed and verifiable according to the MIME standard according to one of claims 1 and 2, this method for obtaining an integrity report comprising the following preliminary steps of:
a. creating a user account by a user from the integrity guarantee network service,
b. receiving an electronic messaging address dedicated to the integrity guarantee network service and to the user,
c. then, when the user wants to guarantee the integrity of an electronic message, the following steps of:
d. writing, by a sender, the electronic message the integrity of which is to be guaranteed,
e. sending the message the integrity of which is to be guaranteed, to at least one destination electronic messaging address and to the electronic messaging address dedicated to the integrity guarantee network service and to the user, the latter sending allowing the implementation of the method for creating an electronic message the integrity of which is guaranteed and verifiable according to one of claims 1 and 2 within a server offering an integrity guarantee network service on receipt of the message at the electronic messaging address dedicated to the integrity guarantee network service and to the user,
f. receiving an integrity report comprising at least one element allowing accessing the electronic message the integrity of which is guaranteed and verifiable according to the MIME standard created by the integrity guarantee network service.

5. The method for obtaining an integrity report according to claim 4, wherein the creation of the user account comprises the following sub-steps of:
a. sending an electronic message to an electronic messaging address of the integrity guarantee network service,
b. receiving an electronic message comprising a link for finalising the registration on a web page of the integrity guarantee network service,
c. finalising the registration via the web page of the integrity guarantee network service triggering the sending of the electronic messaging address dedicated to the integrity guarantee network service to be used as recipient for the subsequent sending of electronic messages the integrity of which is to be guaranteed.

6. A method for obtaining an integrity report for an electronic message the integrity of which is to be guaranteed from an integrity guarantee network service using a method for creating an electronic message the integrity of which is guaranteed and verifiable according to the MIME standard according to one of claims 1 and 2, this method for obtaining an integrity report being implemented from a device of a user using a messaging client, the method comprising the following preliminary steps of:
a. creating a user account by a user from the integrity guarantee network service,
b. installing an additional module dedicated to the integrity guarantee network service on a messaging client generating the insertion of a command dedicated to the integrity guarantee on the messaging client, the additional module being configured with an electronic messaging address dedicated to the integrity guarantee network service to the user,
c. then, when the user wants to guarantee the integrity of an electronic message, the following steps of:
d. writing the electronic message the integrity of which is to be guaranteed,
e. actuating the command dedicated to the integrity guarantee upon writing the message, which triggers, when it is activated, upon sending the message the integrity of which is to be guaranteed to at least one destination electronic messaging address, the automatic sending in parallel to the electronic messaging address dedicated to the integrity guarantee network service and to the user for implementing the method for creating an electronic message the integrity of which is guaranteed and verifiable according to one of claims 1 and 2,
f. receiving an integrity report comprising at least one element allowing accessing the electronic message the integrity of which is guaranteed and verifiable according to the MIME standard created by the integrity guarantee network service.

7. A method for obtaining an integrity report for an electronic message the integrity of which is to be guaranteed from an integrity guarantee network service using a method for creating an electronic message the integrity of which is guaranteed and verifiable according to the MIME standard according to one of claims 1 and 2, this method for obtaining an integrity report being implemented from a device of a user using a messaging client,
a. the method comprising a preliminary step of configuring the messaging client with a messaging server itself offering the Internet service for guaranteeing the integrity of the electronic messages,
b. then the following steps of:
c. - writing the electronic message the integrity of which is to be guaranteed for the attention of a recipient,
d. - sending the electronic message via the messaging server defined in the configuration of the messaging client, the latter directly sending the message to the recipient and performing itself the method for creating an electronic message the integrity of which is guaranteed and verifiable according to one of claims 1 and 2 and the construction of an integrity report, for sending to the messaging client, comprising at least one element allowing accessing the electronic message the integrity of which is guaranteed and verifiable according to the MIME standard created by the integrity guarantee network service,
e. - receiving the integrity report by the messaging client.

8. A method for obtaining an integrity report for an electronic message the integrity of which is to be guaranteed from an integrity guarantee network service using a method for creating an electronic message the integrity of which is guaranteed and verifiable according to the MIME standard according to one of claims 1 and 2, this method for obtaining an integrity report being implemented from a device of a user using an account of an Internet messaging service whose messaging servers themselves offer the Internet service for guaranteeing the integrity of the electronic messages, the method comprising, when the user wants to guarantee the integrity of an electronic message, the following steps of:
a. - writing the electronic message the integrity of which is to be guaranteed for the attention of a recipient by indicating the need for an integrity guarantee in the Internet messaging service,
b. - sending the electronic message via the messaging server, the latter sending the message directly to the recipient and itself performing the method for creating an electronic message the integrity of which is guaranteed and verifiable according to one of claims 1 and 2 and the construction of an integrity report, for sending to the user's account, comprising at least one element allowing accessing the electronic message the integrity of which is guaranteed and verifiable according to the MIME standard created by the integrity guarantee network service,
c. - receiving the integrity report in the user's account.

9. The method for obtaining an integrity report according to one of claims 4 to 8, wherein, a request for acknowledgement of receipt being added into the message the integrity of which is to be guaranteed, the obtained acknowledgement of receipt is included in the integrity report.

10. A method for obtaining an integrity report for an electronic message the integrity of which is to be guaranteed from an integrity guarantee network service using a method for creating an electronic message the integrity of which is guaranteed and verifiable according to the MIME standard according to one of claims 1 and 2, this method for obtaining an integrity report being implemented from a device of a user using a messaging client, the method comprising the following preliminary steps of:
a. creating a user account by a user from the integrity guarantee network service,
b. installing an additional module dedicated to the integrity guarantee network service on the messaging client generating the insertion of a command dedicated to the integrity guarantee on the messaging client, the additional module being configured with an electronic messaging address dedicated to the integrity guarantee network service to the user,
c. then, when the user wants to guarantee the integrity of an electronic message, the following steps of:
d. writing the electronic message the integrity of which is to be guaranteed,
e. upon activation of the command for sending the electronic message, before sending the message to the recipient, sending the electronic message to the electronic messaging address dedicated to the integrity guarantee network service for implementing the method for creating an electronic message the integrity of which is guaranteed and verifiable according to one of claims 1 and 2,
f. receiving, by the additional module, the electronic message the integrity of which is guaranteed and verifiable,
g. sending, by the additional module, the electronic message the integrity of which is guaranteed and verifiable to the recipient with a request for acknowledgement of receipt,
h. receiving the acknowledgement of receipt,
i. the integrity report consisting of at least the acknowledgement of receipt and the electronic message the integrity of which is guaranteed and verifiable or the acknowledgement of receipt and an element allowing accessing the electronic message the integrity of which is guaranteed and verifiable according to the MIME standard created by the integrity guarantee network service.

11. A method for obtaining an integrity report for an electronic message the integrity of which is to be guaranteed from an integrity guarantee network service using a method for creating an electronic message the integrity of which is guaranteed and verifiable according to the MIME standard according to one of claims 1 and 2, this method for obtaining an integrity report being implemented from a device of a user using a messaging client,
a. the method comprising a preliminary step of configuring the messaging client with a messaging server itself offering the Internet service for guaranteeing the integrity of the electronic messages,
b. then, when the user wants to guarantee the integrity of an electronic message, the following steps of:
c. - writing the electronic message the integrity of which is to be guaranteed for the attention of a recipient,
d. - sending the electronic message via the messaging server defined in the configuration of the messaging client, the latter itself performing the method for creating an electronic message the integrity of which is guaranteed and verifiable according to one of claims 1 and 2, then sending, with request for acknowledgement of receipt, the electronic message the integrity of which is guaranteed and verifiable to the recipient, receiving the acknowledgement of receipt, and finally, constructing, for sending to the messaging client, an integrity report with at least the acknowledgement of receipt and one element allowing accessing the electronic message the integrity of which is guaranteed and verifiable according to the MIME standard created by the integrity guarantee network service,
e. - receiving the integrity report by the messaging client.

12. A method for obtaining an integrity report for an electronic message the integrity of which is to be guaranteed from an integrity guarantee network service using a method for creating an electronic message the integrity of which is guaranteed and verifiable according to the MIME standard according to one of claims 1 and 2, this method for obtaining an integrity report being implemented from a device of a user using an account of an Internet messaging service whose messaging servers themselves offer the Internet service for guaranteeing the integrity of the electronic messages, the method comprising, when the user wants to guarantee the integrity of an electronic message, the following steps of:
a. - writing the electronic message the integrity of which is to be guaranteed for the attention of a recipient by indicating the need for an integrity guarantee in the Internet messaging service,
b. - sending the electronic message via the messaging server itself performing the method for creating an electronic message the integrity of which is guaranteed and verifiable according to one of claims 1 and 2, this messaging server sending, with request for acknowledgement of receipt, the electronic message the integrity of which is guaranteed and verifiable to the recipient, receiving the acknowledgement of receipt, and finally, constructing, for sending to the user's account, an integrity report with at least the acknowledgement of receipt and one element allowing accessing the electronic message the integrity of which is guaranteed and verifiable according to the MIME standard created by the integrity guarantee network service,
c. - receiving the integrity report in the user's account.

13. The method for obtaining an integrity report according to one of claims 4 to 12, wherein the element allowing accessing the electronic message the integrity of which is guaranteed and verifiable according to the MIME standard created by the integrity guarantee network service is the electronic message, the integrity of which is guaranteed and verifiable, itself.

14. The method for obtaining an integrity report according to one of claims 4 to 12, wherein the element allowing accessing the electronic message the integrity of which is guaranteed and verifiable according to the MIME standard created by the integrity guarantee network service is the transaction identifier in the blockchain, this identifier being stored associated with the message the integrity of which is guaranteed within a server allowing the verification of the integrity of the message.

15. A server offering an Internet services for guaranteeing the integrity of the electronic messages by creating an electronic message the integrity of which is guaranteed and verifiable according to the MIME standard from an electronic message according to the MIME standard comprising, according to this standard, a header comprising at least data regarding routing and regarding content type, an address of the sender and at least one recipient address, and a body comprising a message content, the MIME standard allowing the insertion, into the header, of one or more extension fields or one or more user-defined fields, these fields comprising a pair formed of at least one tag allowing identifying the field and of a value, said server being adapted to receive electronic messages the integrity of which is to be guaranteed, said server comprising a module for calculating an integrity value from the received electronic message, said server having access to a blockchain to store the integrity value in a transaction of this blockchain, and to receive therefrom a transaction identifier, said server being adapted to insert the transaction identifier as the value associated with a specific tag in an extension field or in a user-defined field in the header of the electronic message the integrity of which is to be guaranteed, the electronic message thus obtained constituting the message the integrity of which is guaranteed and verifiable.

16. The server according to claim 15, **characterised in that** it is the messaging server of the sender or of the recipient.

17. A messaging client comprising an additional module dedicated to the integrity guarantee network service on a messaging client generating the insertion of a command dedicated to the integrity guarantee on the messaging client, the additional module being configured with an electronic messaging address dedicated to the integrity guarantee network service to the user, and adapted to implement the method for obtaining an integrity report of one of claims 6 and 10.

18. A device comprising the messaging client according to claim 17.
